# EUROPÄISCHE PATENTSCHRIFT

(11) **EP 3 427 326 B1**
(45) Veröffentlichungstag und Bekanntmachung des Hinweises auf die Patenterteilung: **16.12.2020**
(21) Anmeldenummer: 17708507.3
(22) Anmeldetag: 03.03.2017
(51) Int. Cl.: H01M 10/625, H01M 10/63, H01M 10/615, H01M 10/6565, H01M 10/613

(54) **BATTERIESYSTEM, VERFAHREN ZUM BETRIEB EINES BATTERIESYSTEMS UND KRAFTFAHRZEUG**
BATTERY SYSTEM, METHOD FOR OPERATING A BATTERY SYSTEM, AND MOTOR VEHICLE
SYSTÈME FORMANT BATTERIE, PROCÉDÉ DE FONCTIONNEMENT D'UN SYSTÈME FORMANT BATTERIE, ET VÉHICULE À MOTEUR

(30) Priorität: 11.03.2016 DE 102016204097
(43) Veröffentlichungstag der Anmeldung: 16.01.2019
(73) Patentinhaber: Robert Bosch GmbH, 70442 Stuttgart (DE); GS Yuasa International Ltd., Kisshoin, Minami-ku, Kyoto-shi, Kyoto 601-8520 (JP)
(72) Erfinder: RIEDMANN, Matthias, 70188 Stuttgart (DE); KOHN, Peter, 70178 Stuttgart (DE); HAFENBRAK, Robert, 70469 Stuttgart (DE); GREINER, Daniel Bernd, 72070 Tuebingen (DE); WAGNER, Christian, 70469 Stuttgart (DE)
(74) Vertreter: Isarpatent
(86) Internationale Anmeldenummer: PCT/EP2017/055010
(87) Internationale Veröffentlichungsnummer: WO 2017/153271

(56) Entgegenhaltungen:
- WO-A1-02/052206
- DE-A1-102011 016 070
- DE-A1-102012 023 823
- DE-B3-102014 109 580
- US-A1- 2012 037 336

## Beschreibung

### Stand der Technik

Die Erfindung geht aus von einem Batteriesystem nach Gattung des unabhängigen Anspruchs. Gegenstand der vorliegenden Erfindung sind auch ein Verfahren zum Betrieb des Batteriesystems und ein Kraftfahrzeug dieses enthaltend.

Aus dem Stand der Technik ist es bekannt, dass in Batteriezellen eines Batteriemoduls bzw. einer Batterie ablaufende Prozesse innerhalb eines bestimmten Temperaturbereichs bevorzugt ablaufen und die Batteriezellen somit einen höheren Wirkungsgrad erreichen können. Insbesondere vor einer Fahrt mit einem mittels einer Batterie angetriebenen Kraftfahrzeug sollten die Batteriezellen daher erwärmt werden, um Schädigungen an den Batteriezellen zu vermeiden und deren Leistungsfähigkeit zu Beginn einer Fahrt zu erhöhen.

Die Druckschrift DE 10 2013 225 582 A1 offenbart ein Batteriesystem mit mindestens einem elektrochemischen Energiespeicher, einem latenten und/oder thermochemischen Wärmespeicher zur Speicherung von Wärmeenergie und zur auslösbaren Freigabe von der in dem Wärmespeicher gespeicherten Wärmeenergie, wobei die Auslösung von mindestens einer Auslöseeinrichtung gesteuert wird.

Aus der Druckschrift DE 10 2012 012 820 A1 ist eine Batterieanordnung für ein Kraftfahrzeug mit einer elektrischen Speichereinrichtung bekannt. Die elektrische Speichereinrichtung versorgt einen Elektromotor mit elektrischer Energie, um das Kraftfahrzeug anzutreiben. Weiterhin weist die Batterieanordnung eine Temperiereinrichtung auf, welche zur Temperierung der elektrischen Speichereinrichtung ausgebildet ist. Die Temperiereinrichtung umfasst einen thermochemischen Wärmespeicher, wobei der Wärmespeicher mittels der Abwärme einer Bremse, des Elektromotors oder eines Generators des Kraftfahrzeugs regenerierbar ist.

Weiterhin offenbart die Druckschrift DE 10 2013 016 795 A1 eine Batterie aufweisend Batterieeinzelzellen und einen mit einer Wärmequelle verbindbaren Latentwärmespeicher, der in zumindest mittelbar wärmeleitendem Kontakt zu den Batterieeinzelzellen ausgebildet ist. Der Latentwärmespeicher weist ein Phasenwechselmaterial auf.

Die DE 10 2011 016 070 A1 beschreibt ein kombiniertes Heiz- und Kühlsystem für ein Fahrzeug, wobei eine Batterie, eine Leistungselektronik und ein Elektromotor als Wärmequellen in einen Kühlmittelkreislauf integriert sein oder durch einen Kühlmittelkreislauf gekühlt werden können, der gleichzeitig Luft kühlt, die einer Fahrzeugkabine zugeführt wird.

Die DE 10 2014 109 580 B3 beschreibt ein Fahrzeug, das einen ersten Kühlkreislauf, der mit einem ersten Wärmespeicher und einem Konverter gekoppelt ist, und einen zweiten Kühlkreislauf, der mit einer Batterie gekoppelt ist, und einen zweiten Wärmespeicher umfasst. Der erste und der zweite Wärmespeicher sind mit einem Reaktandenspeicher gekoppelt, der einen Reaktand enthält. Zur Wärmeversorgung des Konverters und der Batterie wird der Reaktand den Wärmespeichern zugeführt, wo dieser sich an ein Reaktionsmedium anlagert, was zur Freisetzung von Wärme führt. Dadurch wird das Kühlmedium, das in den Kühlkreisläufen zirkuliert, erwärmt. Zur Kühlung der Batterie und des Konverters wird das in den Kühlkreisläufen zirkulierende Kühlmedium durch den Konverter und die Batterie erwärmt und überträgt diese Wärme auf die Wärmespeicher. Dabei wird die Bindung zwischen dem Reaktionsmedium und dem Reaktionsmittel durch Wärmeaufnahme gelöst und dadurch Wärme gespeichert.

### Offenbarung der Erfindung

Erfindungsgemäß ist ein Batteriesystem mit den Merkmalen des Anspruchs 1 und ein Verfahren mit den Merkmalen des Anspruchs 10 vorgesehen.

Das Batteriesystem und das Verfahren zum Betrieb eines solchen Batteriesystems mit den Merkmalen der unabhängigen Ansprüche haben den Vorteil, dass von zumindest einer Komponente einer Leistungselektronik erzeugte Abwärme gespeichert und genutzt werden kann, um eine Batterie zu erwärmen. Dadurch ist es möglich, die Anzahl zusätzlicher für eine Erwärmung der Batterie ausgebildeter Heizelemente zu reduzieren oder sogar gänzlich auf weitere Heizelemente zu verzichten.

Erfindungsgemäß wird ein Batteriesystem mit einer Batterie, einem Wärmespeicher und zumindest einer Wärmequelle zur Verfügung gestellt. Das Batteriesystem ist dabei insbesondere ein Batteriesystem eines Kraftfahrzeuges. Der Wärmespeicher ist zur Speicherung von Wärmeenergie und zur Abgabe von Wärme ausgeführt. Weiterhin ist die Wärmequelle zur Abgabe von Wärme ausgebildet. Dabei ist die Wärmequelle zur Abgabe von Wärme an den Wärmespeicher eingerichtet und durch zumindest eine Komponente einer Leistungselektronik gebildet, und der Wärmespeicher ist zur Aufnahme von Wärme von der Wärmequelle sowie zur Abgabe von Wärme an die Batterie eingerichtet. Dabei ist die Wärmequelle zumindest eine Komponente einer Leistungselektronik.

Insbesondere kann mit dem Begriff Batterie eine Batteriezelle, ein mehrere Batteriezellen aufweisendes Batteriemodul oder eine mehrere Batteriemodule umfassende Batterie beschrieben sein.

Die Leistungselektronik beschreibt dabei ein Element, welches bspw. aus einer Wechselspannung eine in Frequenz und Amplitude dazu unterschiedliche Wechselspannung erzeugt, um elektrische Maschinen oder Kraftfahrzeuge anzutreiben. Ein solches Element kann beispielsweise ein Umrichter (AC/AC-Konverter) oder ein Frequenzumrichter sein.
Weiterhin kann die Leistungselektronik dabei auch ein Element sein, welches bspw. Gleichspannung in Wechselspannung umrichtet. Ein solches Element kann beispielsweise ein Wechselrichter (Inverter) sein.

Eine Leistungselektronik weist dabei eine Vielzahl an Komponenten auf, wie bspw. Kondensatoren, Halbleiterelemente, Regler, Transistoren, Dioden und Widerstände, welche während des Betriebs der Leistungselektronik Abwärme erzeugen können.

An dieser Stelle sei angemerkt, dass unter einem Wärmespeicher eine Anordnung mit einem bevorzugt isolierenden Gehäuse, in welchem ein Wärmespeichermedium oder ein Wärmespeichermaterial aufgenommen ist, verstanden sein soll. Weiterhin ist der Wärmespeicher, insbesondere das isolierende Gehäuse, stationär in dem Batteriesystem angeordnet. Dabei kann auch das bevorzugt in dem Gehäuse aufgenommene Wärmespeichermaterial oder Wärmespeichermedium stationär angeordnet sein. Zur Wärmeübertragung zwischen der Wärmequelle und dem Wärmespeicher und/oder zwischen dem Wärmespeicher und der Batterie weist der Wärmespeicher zumindest einen Anschluss oder Kontakt auf, mittels welchem eine wärmeleitende Verbindung mit der Wärmequelle bzw. der Batterie hergestellt werden kann. Als Wärmespeicher sollen somit keine durch das Batteriesystem strömenden Fluide bezeichnet sein. Solche durch das Batteriesystem strömenden Fluide dienen bevorzugt dazu, Wärme zwischen dem zumindest einen Anschluss oder dem Kontakt des Wärmespeichers und der Batterie bzw. der Wärmequelle zu übertragen.

Der verwendete Begriff der Wärmeenergie eines Systems (bspw. Wärmequelle, Wärmespeicher, Batterie) bezeichnet die thermodynamische Zustandsgröße der Enthalpie. Des Weiteren führt demnach der als Wärmeübertragung bezeichnete Prozess dazu, die als Enthalpie bezeichnete Wärmeenergie eines Systems zu verändern, wobei hierzu die thermodynamische Prozessgröße der Wärme übertragen wird. Eine solche Änderung der Enthalpie kann beispielsweise über eine Veränderung der Temperatur des Systems erfolgen.

Erfindungsgemäß ist vorgesehen, dass das Batteriesystem eine Steuereinrichtung aufweist, welche ein erstes Schaltelement und ein zweites Schaltelement umfasst.
Dabei ist das erste Schaltelement dazu ausgebildet, in einer ersten Anordnung die Wärmequelle und den Wärmespeicher wärmeleitend zu verbinden und in einer zweiten Anordnung die Wärmeleitung zwischen der Wärmequelle und dem Wärmespeicher zu unterbrechen. Weiterhin ist das zweite Schaltelement dazu ausgebildet, in einer ersten Anordnung den Wärmespeicher und die Batterie wärmeleitend zu verbinden und in einer zweiten Anordnung die Wärmeleitung zwischen dem Wärmespeicher und der Batterie zu unterbrechen.
Dadurch ist es möglich, die Wärmeleitung zwischen der Wärmequelle und dem Wärmespeicher bzw. dem Wärmespeicher und der Batterie zu steuern. Insbesondere ist es dadurch möglich, zu einer Erhöhung der Wärmeenergie des Wärmespeichers das erste Schaltelement der Steuereinrichtung in der ersten Anordnung anzuordnen, um somit durch eine Wärmeabgabe von der Wärmequelle an den Wärmespeicher dessen Wärmeenergie zu erhöhen. Dabei kann die Erhöhung der Wärmeenergie des Wärmespeichers durch eine Erhöhung der Temperatur eines darin enthaltenen Wärmespeichermediums oder -materials erfolgen und/oder durch eine Erhöhung der Enthalpie des Wärmespeichermediums bei einer konstanten Temperatur, wobei das Wärmespeichermedium in einem solchen Fall als ein Phasenwechselmaterial bezeichnet ist.
Insbesondere ist es dadurch weiterhin möglich, zu einer Erwärmung der Batterie das zweite Schaltelement der Steuereinrichtung in der ersten Anordnung anzuordnen, um somit durch eine Abgabe von Wärme von dem Wärmespeicher an die Batterie deren Temperatur zu erhöhen oder auch auf einem konstantem Wert zu halten.

Durch die in den abhängigen Ansprüchen aufgeführten Maßnahmen sind vorteilhafte Weiterbildungen und Verbesserungen der im unabhängigen Anspruch angegebenen Vorrichtung oder des im unabhängigen Anspruch angegeben Verfahrens möglich.

Es ist zweckmäßig, dass das erste Schaltelement und das zweite Schaltelement miteinander verbunden sind. Dabei sind das erste Schaltelement und das zweite Schaltelement insbesondere regelungstechnisch miteinander verbunden.
Die Verbindung ist dabei derart ausgebildet, dass in einem ersten Zustand bei der Anordnung des ersten Schaltelements in der ersten Anordnung und des zweiten Schaltelements in der zweiten Anordnung ein die Wärmequelle und den Wärmespeicher umfassender erster Wärmekreislauf ausgebildet ist. Dadurch kann Wärme zwischen der Wärmequelle und dem Wärmespeicher übertragen werden, so dass die Wärmeenergie des Wärmespeichers erhöht werden kann, wobei keine Wärmeübertragung zwischen dem Wärmespeicher und der Batterie möglich ist. Dadurch kann die von der Wärmequelle erzeugte Wärme, welche bevorzugt die Abwärme einer Leistungselektronik ist, mittels des Wärmespeichers gespeichert werden. Eine Anordnung in dem ersten Zustand kann während des Betriebes der Batterie erfolgen, wenn diese bereits ihre Betriebstemperatur erreicht hat und nicht mehr erwärmt werden soll, weil bei einem Stromfluss aufgrund des inneren Widerstandes der Batteriezellen erzeugte Wärme für eine ausreichende Zufuhr von Wärme insbesondere zur Aufrechterhaltung der Temperatur sorgt.
Weiterhin ist die Verbindung dabei derart ausgebildet, dass in einem zweiten Zustand bei der Anordnung des ersten Schaltelements in der zweiten Anordnung und des zweiten Schaltelements in der ersten Anordnung ein den Wärmespeicher und die Batterie umfassender zweiter Wärmekreislauf ausgebildet ist. Dadurch kann Wärme zwischen dem Wärmespeicher und der Batterie übertragen werden, so dass eine Erwärmung der Batterie oder eine Aufrechterhaltung einer Temperatur der Batterie möglich ist. Eine Anordnung in dem zweiten Zustand kann, insbesondere vor dem Betrieb des Batteriesystems bzw. eines Kraftfahrzeuges, in welchem das Batteriesystem angeordnet ist, erfolgen, um die Batterie auf ihre Betriebstemperatur zu erwärmen und dadurch Beeinträchtigungen der Leistung zu Beginn des Fahrens zu verhindern.

Gemäß einem Aspekt der Erfindung umfasst der erste Wärmekreislauf einen wärmeleitend an der Wärmequelle angeordneten ersten Wärmeübertrager, so dass Wärme von der Wärmequelle an den ersten Wärmeübertrager übertragen werden kann. Weiterhin umfasst der erste Wärmekreislauf einen wärmeleitend an dem Wärmespeicher angeordneten zweiten Wärmeübertrager, so dass Wärme vom zweiten Wärmeübertrager an den Wärmespeicher übertragen werden kann. Der erste Wärmeübertrager und der zweite Wärmeübertrager sind mittels eines ersten Abschnittes und eines zweiten Abschnittes wärmeleitend in der Art miteinander verbunden, dass insbesondere ein in dem Wärmekreislauf strömendes Temperierfluid zwischen dem ersten Wärmeübertrager und dem zweiten Wärmeübertrager strömen kann. Dabei strömt das Temperierfluid in dem ersten Abschnitt von dem ersten Wärmeübertrager in Richtung des zweiten Wärmeübertragers und in dem zweiten Abschnitt von dem zweiten Wärmeübertrager in Richtung des ersten Wärmeübertragers.

Gemäß einem weiteren Aspekt der Erfindung umfasst der zweite Wärmekreislauf einen wärmeleitend an dem Wärmespeicher angeordneten ersten Wärmeübertrager, so dass Wärme von dem Wärmespeicher an den ersten Wärmeübertrager übertragen werden kann. Weiterhin umfasst der zweite Wärmekreislauf einen wärmeleitend an der Batterie angeordneten zweiten Wärmeübertrager, so dass Wärme von dem zweiten Wärmeübertrager an die Batterie übertragen werden kann. Der erste Wärmeübertrager und der zweite Wärmeübertrager sind mittels eines ersten Abschnittes und eines zweiten Abschnittes in der Art wärmeleitend miteinander verbunden, dass insbesondere ein in dem Wärmekreislauf strömendes Temperierfluid zwischen dem ersten Wärmeübertrager und dem zweiten Wärmeübertrager strömen kann. Dabei strömt das Temperierfluid in dem ersten Abschnitt von dem ersten Wärmeübertrager in Richtung des zweiten Wärmeübertrager und in dem zweiten Abschnitt von dem zweiten Wärmeübertrager in Richtung des ersten Wärmeübertragers.

Bevorzugt sind der erste Wärmekreislauf und der zweite Wärmekreislauf jeweils als Fluidkreislauf ausgebildet und umfassen eine gemeinsame Fördereinrichtung. Mit anderen Worten ausgedrückt bedeutet dies, dass das Batteriesystem eine Fördereinrichtung aufweist, welche in dem ersten und dem zweiten Wärmekreislauf angeordnet ist. Die Fördereinrichtung ist dabei dazu eingerichtet, ein Temperierfluid zu fördern und somit die Wärmeleitung zu verbessen. Die Fördereinrichtung ist bevorzugt als Pumpe ausgebildet.

Neben der auf einer Temperierfluidströmung basierenden Möglichkeit zur Wärmeübertragung zwischen der Wärmequelle und dem Wärmespeicher bzw. dem Wärmespeicher und der Batterie ist es auch möglich, Wärme durch Wärmeleitung oder Wärmestrahlung zu übertragen.
Zu einer Übertragung der Wärme beispielsweise mittels Wärmeleitung werden die Wärmequelle und der Wärmespeicher bzw. der Wärmespeicher und die Batterie mit einem wärmeleitenden Element mit einer im Vergleich zur Umgebung höheren thermischen Leitfähigkeit, wie beispielsweise einem metallischen Element, verbunden, wobei zu einer Unterbrechung der Wärmeübertragung zumindest eine der Verbindungen bevorzugt unterbrechbar ausgeführt ist.
Zu einer Übertragung der Wärme beispielsweise mittels Wärmestrahlung werden an der Wärmequelle und an dem Wärmespeicher bzw. an dem Wärmespeicher und an der Batterie einander gegenüberliegende Elemente mit einem im Vergleich zur Umgebung höheren Emissionsgrad angeordnet, wobei auch die Wärmeübertragung durch Wärmestrahlung beispielsweise durch ein isolierendes Element unterbrechbar ausgeführt ist.

Ein weiterer Aspekt der Erfindung sieht vor, dass der Wärmespeicher ein thermochemischer Wärmespeicher oder ein Latentwärmespeicher ist.
Bei einem thermochemischen Wärmespeicher führt zugeführte Energie, insbesondere Wärme, zu einem endothermen Prozess, wodurch diese in dem Wärmespeicher gespeichert werden kann. Zur Abgabe der somit gespeicherten Energie, insbesondere Wärme, wird diese unter Ablauf eines (zu dem endothermen Prozess umgekehrten) exothermen Prozesses freigesetzt. Ein solcher thermochemischer Wärmespeicher kann beispielsweise Silica-Gel umfassen, wobei durch eine endotherme Desorption von Wasser aus dem Silica-Gel Wärme gespeichert werden kann und durch eine exotherme Adsorption von Wasser in dem Silica-Gel Wärmeenergie frei wird.
Ein Latentwärmespeicher kann ein Phasenwechselmaterial umfassen, bei welchem Wärme bei einer konstanten Temperatur des Phasenwechselmaterials aufgenommen werden kann und insbesondere auch einen Phasenwechsel bewirken kann. Die Wärme kann hierbei wieder bei der konstanten Temperatur abgegeben werden, insbesondere unter Umkehr des Phasenwechsels.

Gemäß einem weiteren Gedanken der Erfindung kann der Wärmespeicher weiterhin ein Heizelement umfassen, welches insbesondere als elektrisches Heizelement ausgebildet ist. Damit ist es möglich, zusätzliche Wärme in den Wärmespeicher einzubringen, sollte die von der Wärmequelle erzeugte Wärme nicht ausreichen die Wärmeenergie des Wärmespeichers ausreichend zu erhöhen, um die Batterie insbesondere kurz vor dem Start eines Kraftfahrzeuges zu erwärmen.

Ferner betrifft die Erfindung ein Verfahren zum Betrieb eines Batteriesystems, welches vorangehend beschrieben wurde. Dabei wird zu einer Erhöhung der Wärmeenergie des Wärmespeichers das erste Schaltelement in der ersten Anordnung angeordnet und das zweite Schaltelement in der zweiten Anordnung. Dadurch kann die von der Wärmequelle erzeugte Wärme dazu genutzt werden, die Wärmeenergie des Wärmespeichers zu erhöhen. Weiterhin wird dabei zu einer Erhöhung der Temperatur der Batterie das erste Schaltelement in der zweiten Anordnung angeordnet und das zweite Schaltelement in der ersten Anordnung. Dadurch kann die Temperatur der Batterie mittels der in dem Wärmespeicher gespeicherten Wärmeenergie erhöht werden. Diese beiden Möglichkeiten haben den Vorteil, dass nur eine der beiden beschriebenen Wärmeleitungen ablaufen kann und somit die Effektivität erhöht wird.

Von Vorteil ist es, wenn das Batteriesystem in einem Kraftfahrzeug angeordnet wird und während eines Betriebes des Fahrzeuges das erste Schaltelement in der ersten Anordnung und das zweite Schaltelement in der zweiten Anordnung angeordnet werden. Damit kann die Wärmeenergie des Wärmespeichers erhöht werden, ohne Wärme an die Batterie abzugeben. Da die Batterie während des Betriebes aufgrund ihres elektrischen Innenwiderstandes bei einem Stromfluss Wärme erzeugt, ist unter Umständen keine Erwärmung mittels des Wärmespeichers mehr erwünscht.

Weiterhin von Vorteil ist es, wenn das Batteriesystem in einem Kraftfahrzeug angeordnet wird und vor dem Betrieb des Fahrzeuges und/oder während des Betriebes des Fahrzeuges das erste Schaltelement in der zweiten Anordnung und das zweite Schaltelement in der ersten Anordnung angeordnet werden. Dadurch kann eine Batterie, welche vor dem Betrieb des Fahrzeuges eine Temperatur unterhalb des optimalen Bereiches aufweist, mittels der in dem Wärmespeicher gespeicherten Wärmeenergie erwärmt werden. Sollte das Batteriesystem dabei auch während des Betriebes des Fahrzeuges derart angeordnet sein, dass das erste Schaltelement in der zweiten Anordnung und das zweite Schaltelement in der ersten Anordnung angeordnet ist, so bezeichnet der Ausdruck "während des Betriebes des Fahrzeuges" eine Zeitspanne zwischen dem Start des Fahrzeuges und dem Erreichen der optimalen Betriebstemperatur der Batterie.

Es ist vorteilhaft, ein vorangehend beschriebenes Batteriesystem aufweisend eine Batterie mit einem Festkörperelektrolyten in der Art zu verwenden, dass die Batterie bevorzugt bei einer Temperatur oberhalb von 60°C betrieben wird, weiterhin bevorzugt bei einer Temperatur oberhalb von 70°C und insbesondere bei einer Temperatur von 80°C betrieben wird. Weiterhin ist es dabei vorteilhaft, die Batterie bevorzugt bei einer Temperatur unterhalb von 100°C zu betreiben, weiter bevorzugt bei einer Temperatur unterhalb von 90°C zu betreiben und insbesondere bei einer Temperatur von 80°C zu betreiben. Insbesondere ist es dabei weiterhin vorteilhaft, wenn die Batterie bei einer Temperatur zwischen 60°C und 100°C betrieben wird, wobei weiter bevorzugt die Batterie zwischen 70°C und 90°C betrieben wird und insbesondere bei 80°C betrieben wird.

Weiterhin betrifft die Erfindung ein Transportmittel, bevorzugt ein Kraftfahrzeug und insbesondere ein Elektro- oder Hybridfahrzeug, mit einem erfindungsgemäßen Batteriesystem oder einem Batteriesystem, welches nach einem erfindungsgemäßen Verfahren betrieben wird.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 schematisch eine Darstellung einer Ausführungsform eines erfindungsgemäßen Batteriesystems in einem ersten Zustand und
Figur 2 schematisch eine Darstellung einer Ausführungsform eines erfindungsgemäßen Batteriesystems in einem zweiten Zustand.

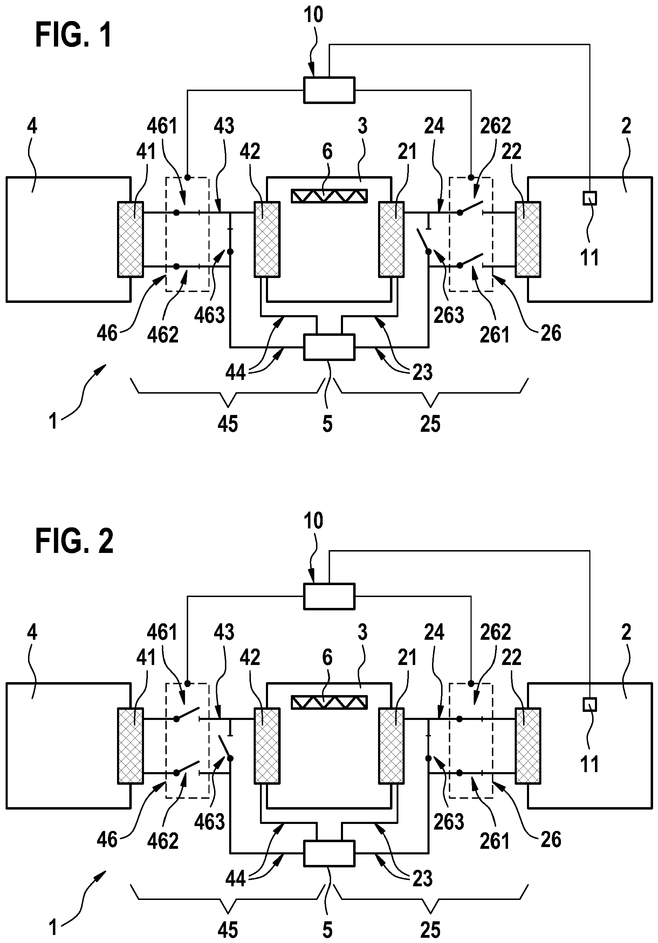

Die Figur 1 zeigt in einer schematischen Darstellung eine Ausführungsform eines erfindungsgemäßen Batteriesystems 1 in einem ersten Zustand, wobei die Figur 2 dasselbe erfindungsgemäße Batteriesystem 1 in einem zweiten Zustand zeigt.

Das Batteriesystem 1 weist eine Batterie 2 auf, die insbesondere Batteriezellen mit einem Festkörperelektrolyten aufweist. Weiterhin weist das Batteriesystem 1 einen Wärmespeicher 3 auf. Ferner weist das Batteriesystem 1 eine Wärmequelle 4 auf. Die in der Figur 1 gezeigte Wärmequelle 4 ist insbesondere zumindest eine Komponente einer Leistungselektronik, beispielsweise eines Inverters oder eines AC/AC-Konverters.

Die Wärmequelle 4 ist zur Abgabe von Wärme an den Wärmespeicher 3 eingerichtet. Der Wärmespeicher 3 ist zur Aufnahme von Wärme von der Wärmequelle 4, zur Speicherung von aufgenommener Wärme unter Erhöhung der Wärmeenergie und zur Abgabe von Wärme an die Batterie 2 eingerichtet. Der Wärmespeicher 3 kann dabei insbesondere als thermochemischer Wärmespeicher oder als Latentwärmespeicher ausgebildet sein.
Die Batterie 2 ist zur Aufnahme von Wärme von dem Wärmespeicher 3 eingerichtet.

Bei dem in der Figur 1 gezeigten ersten Zustand des Batteriesystems 1 kann Wärme von der Wärmequelle 4 an den Wärmespeicher 3 übertragen werden und so dessen Wärmeenergie erhöhen.

Bei dem in Figur 2 gezeigten zweiten Zustand des Batteriesystems 1 kann Wärme von dem Wärmespeicher 3 an die Batterie 2 übertragen werden und somit die Temperatur der Batterie 2 erhöhen und/oder aufrechterhalten.

An der Wärmequelle 4 ist ein erster Wärmeübertrager 41 wärmeleitend angeordnet, wobei insbesondere von der Wärmequelle 4 Wärme an den ersten Wärmeübertrager 41 übertragen werden kann.
An dem Wärmespeicher 3 ist ein zweiter Wärmeübertrager 42 angeordnet, wobei insbesondere von dem zweiten Wärmeübertrager 42 Wärme an den Wärmespeicher 3 übertragen werden kann.
Der erste Wärmeübertrager 41 und der zweite Wärmeübertrager 42 sind mittels eines ersten Abschnittes 43 und eines zweiten Abschnittes 44 wärmeleitend miteinander verbunden.
Der erste Abschnitt 43 ist dabei bevorzugt von dem ersten Wärmeübertrager 41 in Richtung des zweiten Wärmeübertragers 42 von einem Temperierfluid durchströmbar.
Der zweite Abschnitt 44 ist dabei bevorzugt von dem zweiten Wärmeübertrager 42 in Richtung des ersten Wärmeübertragers 41 von einem Temperierfluid durchströmbar.
Weiterhin sind auch der erste Wärmeübertrager 41 und der zweite Wärmeübertrager 42 von einem Temperierfluid durchströmbar, um eine Kreislaufführung zu ermöglichen und Wärme abzugeben bzw. aufzunehmen. Der erste Wärmeübertrager 41, der zweite Wärmeübertrager 42, der erste Abschnitt 43 und der zweite Abschnitt 44 bilden somit einen ersten Wärmekreislauf 45 aus.

An dem Wärmespeicher 3 ist ein erster Wärmeübertrager 21 wärmeleitend angeordnet, wobei insbesondere von dem Wärmespeicher 3 Wärme an den ersten Wärmeübertrager 21 übertragen werden kann.
An der Batterie 2 ist ein zweiter Wärmeübertrager 22 wärmeleitend angeordnet, wobei insbesondere von dem zweiten Wärmeübertrager 22 Wärme an die Batterie 2 übertragen werden kann.
Der erste Wärmeübertrager 21 und der zweite Wärmeübertrager 22 sind mittels eines ersten Abschnittes 23 und eines zweiten Abschnittes 24 wärmeleitend miteinander verbunden.
Der erste Abschnitt 23 ist dabei bevorzugt von dem ersten Wärmeübertrager 21 in Richtung des zweiten Wärmeübertragers 22 von einem Temperierfluid durchströmbar.

Der zweite Abschnitt 24 ist dabei bevorzugt von dem zweiten Wärmeübertrager 22 in Richtung des ersten Wärmeübertragers 21 von einem Temperierfluid durchströmbar.
Weiterhin sind auch der erste Wärmeübertrager 21 und der zweite Wärmeübertrager 22 von einem Temperierfluid durchströmbar, um eine Kreislaufführung zu ermöglichen und Wärme abzugeben bzw. aufzunehmen. Der erste Wärmeübertrager 21, der zweite Wärmeübertrager 22, der erste Abschnitt 23 und der zweite Abschnitt 24 bilden somit einen zweiten Wärmekreislauf 25 aus.

Das Batteriesystem 1 weist eine Steuereinrichtung 10 auf.
Die Steuereinrichtung 10 umfasst dabei ein erstes Schaltelement 46 und ein zweites Schaltelement 26.
Die Figur 1 zeigt eine Anordnung des ersten Schaltelements 46 in einer ersten Anordnung, bei welcher die Wärmequelle 4 und der Wärmespeicher 3 wärmeleitend verbunden sind.
Weiterhin zeigt die Figur 1 eine Anordnung des zweiten Schaltelements 26 in einer zweiten Anordnung, bei welcher die Wärmeleitung zwischen dem Wärmespeicher 3 und der Batterie 2 unterbrochen ist.
Die Figur 2 zeigt eine Anordnung des ersten Schaltelements 46 in einer zweiten Anordnung, bei welcher die Wärmeleitung zwischen der Wärmequelle 4 und dem Wärmespeicher 3 unterbrochen ist.
Weiterhin zeigt die Figur 2 eine Anordnung des zweiten Schaltelements 26 in einer ersten Anordnung, bei welcher der Wärmespeicher 3 und die Batterie 2 wärmeleitend verbunden sind.

Die in den Figuren 1 und 2 gezeigten ersten und zweiten Schaltelemente 46 bzw. 26 sind jeweils innerhalb des zur Verdeutlichung gestrichelt eingezeichneten Kastens angeordnet und weisen jeweils beispielsweise zwei Schaltmittel 461 und 462 bzw. 261 und 262 auf. Die ersten Schaltmittel 461 und 261 sind jeweils in dem ersten Abschnitt 43 bzw. 23 angeordnet. Die zweiten Schaltmittel 462 und 262 sind jeweils in dem zweiten Abschnitt 44 bzw. 24 angeordnet.
Bei einer bevorzugten Durchströmung des ersten Wärmekreislaufes 45 und des zweiten Wärmekreislaufs 25 mit einem Temperierfluid können die Schaltmittel 461, 462, 261, 262 der Schaltelemente 46, 26 beispielsweise als Ventile ausgebildet sein und somit in einem geschlossen Zustand die Strömung des Temperierfluids und damit auch die Wärmeleitung zu unterbrechen. Dabei sind die Schaltmittel 461 und 462 bzw. 261 und 262 jeweils gleichzeitig geöffnet oder gleichzeitig geschlossen, wie aus den Figuren 1 und 2 zu erkennen ist.

Das erste Schaltelement 46 und das zweite Schaltelement 26 sind bevorzugt regelungstechnisch derart miteinander verbunden, dass das Batteriesystem 1 in dem in Figur 1 gezeigten ersten Zustand angeordnet ist oder in dem in Figur 2 gezeigten zweiten Zustand. Dabei kann die regelungstechnische Verbindung mittels der Steuereinrichtung 10, wie in den Figuren 1 und 2 gezeigt, ausgebildet sein.
Die Steuereinrichtung 10 kann dabei weiterhin mit zumindest einem an der Batterie 2 angeordneten Temperatursensor 11 verbunden sein. Somit ist es möglich, dass die Steuereinrichtung 10 die mittels des Temperatursensors 11 gemessene Temperatur der Batterie 2 mit einer Solltemperatur vergleicht und das Batteriesystem 1 in dem zweiten Zustand anordnet, sollte die gemessene Temperatur der Batterie 2 unterhalb der Solltemperatur liegen und in dem ersten Zustand anordnet, sollte die Solltemperatur erreicht sein.
In dem ersten Zustand gemäß Figur 1 ist dabei das erste Schaltelement 46 in der ersten Anordnung und das zweite Schaltelement 26 in der zweiten Anordnung angeordnet, so dass ein die Wärmequelle 4 und den Wärmespeicher 3 umfassender erster Wärmekreislauf 45 ausgebildet ist, um die Wärmeenergie des Wärmespeichers 3 zu erhöhen.
In dem zweiten Zustand gemäß Figur 2 ist dabei das erste Schaltelement 46 in der zweiten Anordnung und das zweite Schaltelement 26 in der ersten Anordnung angeordnet, so dass ein den Wärmespeicher 3 die Batterie 2 umfassender zweiter Wärmekreislauf 25 ausgebildet ist, um die Batterie zu erwärmen.

Weiterhin zeigen die Figuren 1 und 2, dass der erste Wärmekreislauf 45 und der zweite Wärmekreislauf 25 eine gemeinsame Fördereinrichtung 5 umfassen. Die Fördereinrichtung 5 ist dabei derart angeordnet, dass diese sowohl innerhalb des ersten Wärmekreislaufes 45 als auch innerhalb des zweiten Wärmekreislaufes 25 angeordnet ist. Bevorzugt ist die Fördereinrichtung 5 eine Pumpe.
Dies hat insbesondere den Vorteil, da das Batteriesystem 1 in dem ersten Zustand gemäß Figur 1 oder den zweiten Zustand gemäß Figur 2 angeordnet ist, dass die Pumpe 5 sowohl Temperierfluid durch den ersten Wärmekreislauf 45 und den zweiten Wärmekreislauf 45 fördern kann und das Batteriesystems 1 mittels der Schaltelemente 46 und 26 gesteuert werden kann. Unter Steuerung soll hierbei verstanden, ob die Batterie 2 erwärmt wird oder die Wärmeenergie des Wärmespeichers 3 erhöht wird.

Aus den Figuren 1 und 2 ist weiterhin zu erkennen, dass der Wärmespeicher 3 weiterhin ein Heizelement 6 umfassen kann, welches insbesondere als ein elektrisches Heizelement ausgeführt ist. Das Heizelement 6 dient dazu, die Wärmeenergie des Wärmespeichers 3 weiter zu erhöhen, sollte die der Batterie 2 zugeführte Wärme nicht ausreichend sein. Dazu kann das Heizelement 6 mit der Steuereinrichtung 10 verbunden sein.

Weiterhin ist aus den Figuren 1 und 2 zu erkennen, dass der erste Wärmekreislauf 45 ein weiteres Schaltmittel 463 aufweisen kann und der zweite Wärmekreislauf 25 ein weiteres Schaltmittel 263 aufweisen kann.
Dadurch ist es möglich, das erste Schaltelement 46 in dem insbesondere in Figur 2 gezeigten zweiten Zustand anzuordnen und das zweite Schaltelement 26 in dem insbesondere in Figur 1 gezeigten zweiten Zustand anzuordnen und durch Anordnung zumindest eines der weiteren Schaltmittel 463, 263 in einem durchströmbaren Zustand einen insbesondere nur die Fördereinrichtung 5 und den Wärmespeicher 3 (bzw. der Wärmeübertrager 21, 42) sowie Bereiche der ersten Abschnitte 43, 23 und der zweiten Abschnitte 44, 24 umfassenden dritten Wärmekreislauf auszubilden.
Eine solche Anordnung kann auch von Vorteil sein, wenn bspw. das Temperierfluid bereits eine hohe Wärmeenergie aufweist und die Batterie nicht mehr erwärmt werden soll, so dass die vorhandene Wärmeenergie des Temperierfluids noch an den Wärmespeicher 3 abgegeben werden kann, ohne den ersten Wärmeübertrager 41 und/oder den zweiten Wärmeübertrager 22 zu durchströmen, wodurch die Druckverluste verringert werden können und die vorhandene Wärme ausgenutzt werden kann.
Des Weiteren kann mittels der Anordnung eines der weiteren Schaltmittel 463 bzw. 263 in einem durchströmbaren Zustand auch ein Bypass zu dem ersten bzw. zweiten Wärmekreislauf 45 bzw. 25 ausgebildet werden und somit gegebenenfalls die Wärmeübertragung zu beschleunigen.
Die Figur 1 zeigt dabei eine Anordnung, bei welcher das weitere Schaltmittel 463 in einem durchströmbaren Zustand angeordnet ist und somit einen Bypass innerhalb des ersten Wärmekreislaufes 45 ausbildet.
Die Figur 2 zeigt dabei eine Anordnung, bei welcher das weitere Schaltmittel 263 in einem durchströmbaren Zustand angeordnet ist und somit einen Bypass innerhalb des zweiten Wärmekreislaufes 25 ausbildet.

## Patentansprüche

1. Batteriesystem für ein Kraftfahrzeug, mit einer Batterie (2),
einem zur Speicherung von Wärmeenergie und zur Abgabe von Wärme ausgeführten Wärmespeicher (3),
zumindest einer zur Abgabe von Wärme ausgebildeten Wärmequelle (4), wobei die Wärmequelle (4) zur Abgabe von Wärme an den Wärmespeicher (3) eingerichtet und durch zumindest eine Komponente einer Leistungselektronik gebildet ist, und wobei der Wärmespeicher (3) zur Aufnahme von Wärme von der Wärmequelle (4) und zur Abgabe von Wärme an die Batterie (2) eingerichtet ist, und
einer Steuereinrichtung (10) mit einem ersten Schaltelement (46), welches dazu ausgebildet ist, in einer ersten Anordnung die Wärmequelle (4) und den Wärmespeicher (3) wärmeleitend zu verbinden und in einer zweiten Anordnung die Wärmeleitung zwischen der Wärmequelle (4) und dem Wärmespeicher (3) zu unterbrechen, und einem zweites Schaltelement (26), welches dazu ausgebildet ist, in einer ersten Anordnung den Wärmespeicher (3) und die Batterie (2) wärmeleitend zu verbinden und in einer zweiten Anordnung die Wärmeleitung zwischen dem Wärmespeicher (3) und der Batterie (2) zu unterbrechen.

2. Batteriesystem nach Anspruch 1, **dadurch gekennzeichnet, dass** die Batterie (2) einen Festkörperelektrolyten aufweist.

3. Batteriesystem nach Anspruch 1 oder 2, wobei
das erste Schaltelement (46) und das zweite Schaltelement (26) miteinander verbunden sind, in der Art,
dass in einem ersten Zustand bei der Anordnung des ersten Schaltelements (46) in der ersten Anordnung und des zweiten Schaltelements (26) in der zweiten Anordnung ein die Wärmequelle (4) und den Wärmespeicher (3) umfassender erster Wärmekreislauf (45) ausgebildet ist, und
dass in einem zweiten Zustand bei der Anordnung des ersten Schaltelements (46) in der zweiten Anordnung und des zweiten Schaltelements (26) in der ersten Anordnung ein den Wärmespeicher (3) und die Batterie (2) umfassender zweiter Wärmekreislauf (25) ausgebildet ist.

4. Batteriesystem nach Anspruch 3, wobei
der erste Wärmekreislauf (45) einen ersten wärmeleitend an der Wärmequelle (4) angeordneten Wärmeübertrager (41) und einen zweiten wärmeleitend an dem Wärmespeicher (3) angeordneten Wärmeübertrager (42) umfasst, welche mittels eines ersten Abschnitts (43) und eines zweiten Abschnittes (44) wärmeleitend miteinander verbunden sind, und/oder
der zweite Wärmekreislauf (25) einen ersten wärmeleitend an dem Wärmespeicher (3) angeordneten Wärmeübertrager (21) und einen zweiten wärmeleitend an der Batterie (2) angeordneten Wärmeübertrager (22) umfasst, welche mittels eines ersten Abschnitts (23) und eines zweiten Abschnittes (24) wärmeleitend miteinander verbunden sind;
**dadurch gekennzeichnet, dass** der erste Wärmekreislauf (45) und der zweite Wärmekreislauf (25) jeweils als Fluidkreislauf ausgebildet sind und eine gemeinsame Fördereinrichtung (5) umfassen.

5. Batteriesystem nach Anspruch 4, wobei die Fördereinrichtung (5) als Pumpe ausgebildet ist.

6. Batteriesystem nach einem der vorhergehenden Ansprüche, **dadurch gekennzeichnet, dass** der Wärmespeicher (3) ein thermochemischer Wärmespeicher oder ein Latentwärmespeicher ist.

7. Batteriesystem nach Anspruch 6, wobei der Wärmespeicher (3) eine Silica-Gel oder ein Phasenwechselmaterial umfasst.

8. Batteriesystem nach einem der vorhergehenden Ansprüche, **dadurch gekennzeichnet, dass** der Wärmespeicher (3) weiterhin ein Heizelement (6) umfasst.

9. Batteriesystem nach Anspruch 6, wobei der Wärmespeicher (3) ein elektrisches Heizelement umfasst.

10. Verfahren zum Betrieb eines Batteriesystem nach einem der Ansprüche 1 bis 9, **dadurch gekennzeichnet, dass** zur Erhöhung der Wärmeenergie des Wärmespeicher (3) das erste Schaltelement (46) in der ersten Anordnung angeordnet wird und das zweite Schaltelement (26) in der zweiten Anordnung, und dass zur Erhöhung der Temperatur der Batterie (2) das erste Schaltelement (46) in der zweiten Anordnung angeordnet wird und das zweite Schaltelement (26) in der ersten Anordnung.

11. Verfahren nach Anspruch 10, wobei
das Batteriesystem (1) in einem Kraftfahrzeug angeordnet wird, **dadurch gekennzeichnet, dass**
während eines Betriebes des Fahrzeuges, wenn die Batterie (2) ihre Betriebstemperatur erreicht hat und nicht mehr erwärmt werden soll, das erste Schaltelement (46) in der ersten Anordnung und das zweite Schaltelement (26) in der zweiten Anordnung angeordnet werden.

12. Verfahren nach einem der Ansprüche 10 bis 11, wobei
das Batteriesystem (1) in einem Kraftfahrzeug angeordnet wird, durch gekennzeichnet, dass
vor dem Betriebes des Fahrzeuges, um die Batterie auf ihre Betriebstemperatur zu erwärmen, und/oder während des Betriebes des Fahrzeuges, in der Zeitspanne zwischen dem Start des Fahrzeuges und dem Erreichen ihre optimale Betriebstemperatur der Batterie, das erste Schaltelement (46) in der zweiten Anordnung und das zweite Schaltelement (26) in der ersten Anordnung angeordnet werden.

13. Verwendung eines Batteriesystem nach einem der Ansprüche 1 bis 9 und/oder eines Verfahrens nach einem der Ansprüche 10 bis 12, **dadurch gekennzeichnet, dass** die Batterie (2) bei einer Temperatur oberhalb von 60°C und unterhalb von 100°C betrieben wird.

14. Verwendung nach Anspruch 13, wobei die Batterie bei einer Temperatur von 80°C betrieben wird.

15. Kraftfahrzeug mit einem Batteriesystem nach einem der Ansprüche 1 bis 9 oder einem Batteriesystem, welches nach einem der Ansprüche 10 bis 14 betrieben wird.

## Claims

1. Battery system for a motor vehicle, comprising a battery (2),
a heat store (3) which is designed to store thermal energy and to output heat,
at least one heat source (4) which is designed to output heat, wherein the heat source (4) is configured to output heat to the heat store (3) and is formed by at least one component of a power electronics system, and wherein the heat store (3) is configured to receive heat from the heat source (4) and to output heat to the battery (2), and
a control device (10) having a first switching element (46) which is designed to connect the heat source (4) and the heat store (3) in a thermally conductive manner in a first arrangement and to interrupt the conduction of heat between the heat source (4) and the heat store (3) in a second arrangement, and a second switching element (26) which is designed to connect the heat store (3) and the battery (2) in a thermally conductive manner in a first arrangement and to interrupt the conduction of heat between the heat store (3) and the battery (2) in a second arrangement.

2. Battery system according to Claim 1, **characterized in that** the battery (2) has a solid-state electrolyte.

3. Battery system according to Claim 1 or 2, wherein the first switching element (46) and the second switching element (26) are connected to one another in such a way
that a first heat circuit (45) which comprises the heat source (4) and the heat store (3) is formed in a first state when the first switching element (46) is arranged in the first arrangement and the second switching element (26) is arranged in the second arrangement, and that a second heat circuit (25) which comprises the heat store (3) and the battery (2) is formed in a second state when the first switching element (46) is arranged in the second arrangement and the second switching element (26) is arranged in the first arrangement.

4. Battery system according to Claim 3, wherein
the first heat circuit (45) comprises a first heat exchanger (41) which is arranged on the heat source (4) in a thermally conductive manner and a second heat exchanger (42) which is arranged on the heat source (3) in a thermally conductive manner, which first and second heat exchangers are connected to one another in a thermally conductive manner by means of a first section (43) and a second section (44), and/or
the second heat circuit (25) comprises a first heat exchanger (21) which is arranged on the heat store (3) in a thermally conductive manner and a second heat exchanger (22) which is arranged on the battery (2) in a thermally conductive manner, which first and second heat exchangers are connected to one another in a thermally conductive manner by means of a first section (23) and a second section (24), **characterized in that** the first heat circuit (45) and the second heat circuit (25) are each designed as a fluid circuit and comprise a common conveying device (5).

5. Battery system according to Claim 4, wherein the conveying device (5) is designed as a pump.

6. Battery system according to one of the preceding claims, **characterized in that** the heat store (3) is a thermochemical heat store or a latent heat store.

7. Battery system according to Claim 6, wherein the heat store (3) comprises a silica gel or a phase-change material.

8. Battery system according to one of the preceding claims, **characterized in that** the heat store (3) further comprises a heating element (6).

9. Battery system according to Claim 6, wherein the heat store (3) comprises an electrical heating element.

10. Method for operating a battery system according to one of Claims 1 to 9, **characterized in that** the first switching element (46) is arranged in the first arrangement and the second switching element (26) is arranged in the second arrangement for the purpose of increasing the thermal energy of the heat store (3), and **in that** the first switching element (46) is arranged in the second arrangement and the second switching element (26) is arranged in the first arrangement for the purpose of increasing the temperature of the battery (2).

11. Method according to Claim 10, wherein
the battery system (1) is arranged in a motor vehicle, **characterized in that**
the first switching element (46) is arranged in the first arrangement and the second switching element (26) is arranged in the second arrangement during operation of the vehicle when the battery (2) has reached its operating temperature and is no longer intended to be heated.

12. Method according to either of Claims 10 and 11, wherein
the battery system (1) is arranged in a motor vehicle, **characterized in that**
the first switching element (46) is arranged in the second arrangement and the second switching element (26) is arranged in the first arrangement before operation of the vehicle in order to heat the battery to its operating temperature and/or during operation of the vehicle in the time period between starting of the vehicle and the optimum operating temperature of the battery of the said vehicle being reached.

13. Use of a battery system according to one of Claims 1 to 9 and/or a method according to one of Claims 10 to 12, **characterized in that** the battery (2) is operated at a temperature above 60°C and below 100°C.

14. Use according to Claim 13, wherein the battery is operated at a temperature of 80°C.

15. Motor vehicle comprising a battery system according to one of Claims 1 to 9 or a battery system which is operated according to one of Claims 10 to 14.

## Revendications

1. Système formant batterie pour un véhicule à moteur, comportant
une batterie (2),
un accumulateur de chaleur (3) réalisé pour l'accumulation d'énergie thermique et pour le dégagement de chaleur,
au moins une source de chaleur (4) réalisée pour le dégagement de chaleur, dans lequel la source de chaleur (4) est conçue pour le dégagement de chaleur vers l'accumulateur de chaleur (3) et est formée par au moins un composant d'une électronique de puissance, et dans lequel l'accumulateur de chaleur (3) est conçu pour l'absorption de chaleur provenant de la source de chaleur (4) et pour le dégagement de chaleur vers la batterie (2), et
un dispositif de commande (10) comprenant un premier élément de commutation (46), lequel est réalisé pour relier de manière thermoconductrice la source de chaleur (4) et l'accumulateur de chaleur (3) dans un premier agencement et pour interrompre la conduction de chaleur entre la source de chaleur (4) et l'accumulateur de chaleur (3) dans un deuxième agencement, et un deuxième élément de commutation (26), lequel est réalisé pour relier de manière thermoconductrice l'accumulateur de chaleur (3) et la batterie (2) dans un premier agencement et pour interrompre la conduction de chaleur entre l'accumulateur de chaleur (3) et la batterie (2) dans un deuxième agencement.

2. Système formant batterie selon la revendication 1, **caractérisé en ce que** la batterie (2) comprend un électrolyte solide.

3. Système formant batterie selon la revendication 1 ou 2, dans lequel
le premier élément de commutation (46) et le deuxième élément de commutation (26) sont reliés l'un à l'autre de telle sorte
que, dans un premier état en cas d'agencement du premier élément de commutation (46) dans le premier agencement et du deuxième élément de commutation (26) dans le deuxième agencement, un premier circuit thermique (45) comportant la source de chaleur (4) et l'accumulateur de chaleur (3) est réalisé, et
que, dans un deuxième état en cas d'agencement du premier élément de commutation (46) dans le deuxième agencement et du deuxième élément de commutation (26) dans le premier agencement, un deuxième circuit thermique (25) comportant l'accumulateur de chaleur (3) et la batterie (2) est réalisé.

4. Système formant batterie selon la revendication 3, dans lequel
le premier circuit thermique (45) comporte un premier échangeur de chaleur (41) agencé de manière thermoconductrice au niveau de la source de chaleur (4) et un deuxième échangeur de chaleur (42) agencé de manière thermoconductrice au niveau de l'accumulateur de chaleur (3), lesquels échangeurs de chaleur sont reliés l'un à l'autre de manière thermoconductrice au moyen d'une première partie (43) et d'une deuxième partie (44) et/ou
le deuxième circuit thermique (25) comporte un premier échangeur de chaleur (21) agencé de manière thermoconductrice au niveau de l'accumulateur de chaleur (3) et un deuxième échangeur de chaleur (22) agencé de manière thermoconductrice au niveau de la batterie (2), lesquels échangeurs de chaleur sont reliés l'un à l'autre de manière thermoconductrice au moyen d'une première partie (23) et d'une deuxième partie (24) ;
**caractérisé en ce que** le premier circuit thermique (45) et le deuxième circuit thermique (25) sont réalisés respectivement sous forme de circuit de fluide et comportent un dispositif de refoulement commun (5).

5. Système formant batterie selon la revendication 4, dans lequel le dispositif de refoulement (5) est réalisé sous forme de pompe.

6. Système formant batterie selon l'une des revendications précédentes, **caractérisé en ce que** l'accumulateur de chaleur (3) est un accumulateur de chaleur thermochimique ou un accumulateur de chaleur latente.

7. Système formant batterie selon la revendication 6, dans lequel l'accumulateur de chaleur (3) comporte un gel de silice ou un matériau à changement de phase.

8. Système formant batterie selon l'une des revendications précédentes, **caractérisé en ce que** l'accumulateur de chaleur (3) comporte en outre un élément chauffant (6).

9. Système formant batterie selon la revendication 6, dans lequel l'accumulateur de chaleur (3) comporte un élément chauffant électrique.

10. Procédé de fonctionnement d'un système formant batterie selon l'une des revendications 1 à 9, **caractérisé en ce que** pour l'augmentation de l'énergie thermique de l'accumulateur de chaleur (3), le premier élément de commutation (46) est agencé dans le premier agencement et le deuxième élément de commutation (26) est agencé dans le deuxième agencement, et **en ce que** pour l'augmentation de la température de la batterie (2), le premier élément de commutation (46) est agencé dans le deuxième agencement et le deuxième élément de commutation (26) est agencé dans le premier agencement.

11. Procédé selon la revendication 10, dans lequel le système formant batterie (1) est agencé dans un véhicule à moteur, **caractérisé en ce que**
pendant un fonctionnement du véhicule, lorsque la batterie (2) a atteint sa température de fonctionnement et ne doit plus être réchauffée, le premier élément de commutation (46) est agencé dans le premier agencement et le deuxième élément de commutation (26) est agencé dans le deuxième agencement.

12. Procédé selon l'une des revendications 10 à 11, dans lequel
le système formant batterie (1) est agencé dans un véhicule à moteur, **caractérisé en ce**
**qu'**avant le fonctionnement du véhicule, afin de réchauffer la batterie jusqu'à sa température de fonctionnement, et/ou pendant le fonctionnement du véhicule, pendant le laps de temps entre le démarrage du véhicule et l'atteinte de sa température de fonctionnement optimale de la batterie, le premier élément de commutation (46) est agencé dans le deuxième agencement et le deuxième élément de commutation (26) est agencé dans le premier agencement.

13. Utilisation d'un système formant batterie selon l'une des revendications 1 à 9 et/ou d'un procédé selon l'une des revendications 10 à 12, **caractérisée en ce que** la batterie (2) fonctionne à une température supérieure à 60 °C et inférieure à 100 °C.

14. Utilisation selon la revendication 13, dans laquelle la batterie fonctionne à une température de 80 °C.

15. Véhicule à moteur comprenant un système formant batterie selon l'une des revendications 1 à 9 ou un système formant batterie qui fonctionne selon l'une des revendications 10 à 14.
